# EUROPEAN PATENT SPECIFICATION

(11) **EP 1 764 499 B1**
(45) Date of publication and mention of the grant of the patent: **13.12.2017**
(21) Application number: 05077097.3
(22) Date of filing: 14.09.2005
(51) Int. Cl.: F02K 1/76, B64D 29/06, E05B 47/00

(54) **Thrust reverser including a latching mechanism and method of operating a latching mechanism of a thrust reverser**
Schubumkehrvorrichtung mit einer Verriegelungsvorrichtung und Verfahren zur Betätigung einer Verriegelungsvorrichtung einer Schubumkehrvorrichtung
Inverseur de poussée comprenant un dispositif de verrouillage et procédé d'operation d'un dispositif de verrouillage d'un tel inverseur

(43) Date of publication of application: 21.03.2007
(73) Proprietor: The Boeing Company, Chicago, IL 60606-1596 (US)
(72) Inventor: Strunk, John T., Derby, KS 67037 (US); Gabel, Bruce E., Wichita, KS 67212 (US)
(74) Representative: Boult Wade Tennant

(56) References cited:
- EP-A- 0 646 718
- US-A- 2 780 057
- US-A- 3 541 794
- US-A- 4 549 708
- US-A- 5 778 659
- US-A- 5 997 054
- US-A1- 2002 144 499
- US-A1- 2002 145 078

## Description

### TECHNICAL FIELD

The present invention is related to thrust reversers having latching mechanisms and methods for manufacturing such thrust reversers.

### BACKGROUND

Jet aircraft include nacelles for housing the engines and coupling the engines to the wings. The nacelles are contoured to reduce aerodynamic drag during operation of the aircraft. Conventional nacelles include a pair of thrust reverser cowlings that form a clam-shaped structure which wraps around the aircraft engine. During aircraft operation, the thrust reverser cowlings must be capable of withstanding considerable hoop loads caused by the high pressure of the jet exhaust stream flowing therein.

Conventional thrust reverser cowlings are pivotably coupled to a pylon at the upper portion of the nacelle. The thrust reverser cowlings can accordingly be pivoted upward to access the engine for maintenance and/or repair. During aircraft operation, the thrust reverser cowlings are closed and their distal ends are positioned proximate to each other at the lower portion of the nacelle. The distal ends of the thrust reverser cowlings can include a latching mechanism for locking the cowlings together during engine operation.

One drawback of conventional thrust reverser cowlings is that the inner walls may not be sufficiently stiff to prevent significant deflection when used with high-thrust engines. For example, during a rejected take-off, a high-thrust engine places an increased load on the blocker doors of the thrust reverser, which may cause the inner walls to deflect. Significant deflection in the inner walls of the thrust reverser changes the load path between the engine and the thrust reverser, which can damage components in the engine and thrust reverser. Due to space constraints in certain applications, it may not be possible to increase the thickness of the inner walls to preclude significant deflection. Accordingly, there is a need to increase the stiffness of the inner walls of the thrust reverser.

US 3541 794 describes a bifurcated fan duct thrust reverser that includes a pair of duct assemblies hingeably connected to the aircraft supporting structure for rotation between an open position, enabling ready access to the core engine, and a cruise position wherein the duct assemblies surround the core engine downstream of the fan duct.

US 4549 708 describes a cowling latch system. The system includes a coupling that can be remotely operated by means of a cable. The coupling has jaws that are movable from a locked to an unlocked position as a result of the relative movement between the jaws and a housing.

### SUMMARY

In accordance with an aspect of the present invention there is provided an aircraft system and method according to the accompanying claims.

An aircraft system in accordance with one embodiment includes a thrust reverser having a first inner panel and a second inner panel opposite tlie first inner panel. The first and second inner panels have an inner surface and an upper portion. The system further includes a catch projecting inwardly from the first inner panel, and a latch projecting inwardly from the second inner panel. The latch is positioned to selectively interlock with the catch to inhibit relative movement between the first and second inner panels.

The aircraft system may also include a support member.
The first and second inner panels each have an upper portion that may be pivotably attached to the support member. The catch may be attached to a forward portion of the first inner panel, and the latch may be attached to a forward portion of the second inner panel.

The latch includes an engagement member movable between (a) a lock position in which the engagement member is partially received in an opening of the catch, and (b) a release position in which the engagement member is external to the opening of the catch.

### BRIEF DESCRIPTION OF THE DRAWINGS

Figure 1 is a schematic isometric view of an aircraft having a plurality of power plants in accordance with one embodiment of the invention.
Figure 2 is a schematic front view of several components of a thrust reverser in accordance with one embodiment of the invention.
Figure 3 is a schematic side view taken substantially along the line A-A of Figure 2.
Figure 4 is an enlarged schematic isometric view of a catch in accordance with one embodiment of the invention.
Figure 5 is an enlarged schematic view of the catch of Figure 4 and a latch in accordance with one embodiment of the invention.
Figure 6 is a schematic top plan view of the catch and the latch of Figure 5 with the latch in the release position.
Figure 7 is a schematic top plan view of the catch and the latch of Figure 5 with the latch in the lock position.
Figure 8 is a schematic front cross-sectional view of a portion of a thrust reverser.
Figure 9 is a schematic front cross-sectional view of a portion of a thrust reverser in accordance with another embodiment of the invention.

### DETAILED DESCRIPTION

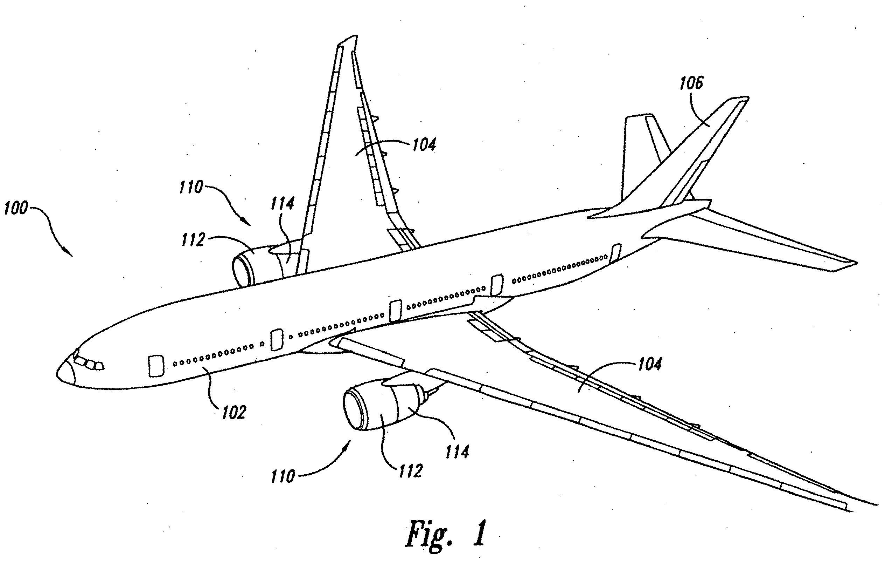

The following disclosure describes thrust reversers having latching mechanisms and methods for manufacturing such thrust reversers. Certain details are set forth in the following description and in Figures 1-9 to provide a thorough understanding of various embodiments of the invention. Other details describing well-known structures and systems often associated with thrust reversers are not set forth in the following disclosure to avoid unnecessarily obscuring the description of various embodiments of the invention.

Many of the details, dimensions, angles, and other features shown in the figures are merely illustrative of particular embodiments of the invention. Accordingly, other embodiments can have other details, dimensions, and/or features without departing from the - scope of the present invention. In addition, further embodiments of the invention may be practiced without several of the details described below, or various aspects of any of the embodiments described below can be combined in different combinations.

### A. Embodiments of Thrust Reversers Having Latching Mechanisms

Figure 1 is a schematic isometric view of an aircraft 100 having a plurality of power plants 110 in accordance with one embodiment of the invention. The aircraft 100 further includes a fuselage 102, a plurality of wings 104 attached to the fuselage 102, and a tail 106 attached to the fuselage 102. In the illustrated embodiment, the power plants 110 are mounted to corresponding wings 104; however, in other embodiments, the power plants 110 can be coupled to the fuselage 102 and/or the tail 106. The individual power plants 110 include a jet engine 112 and a thrust reverser 114.

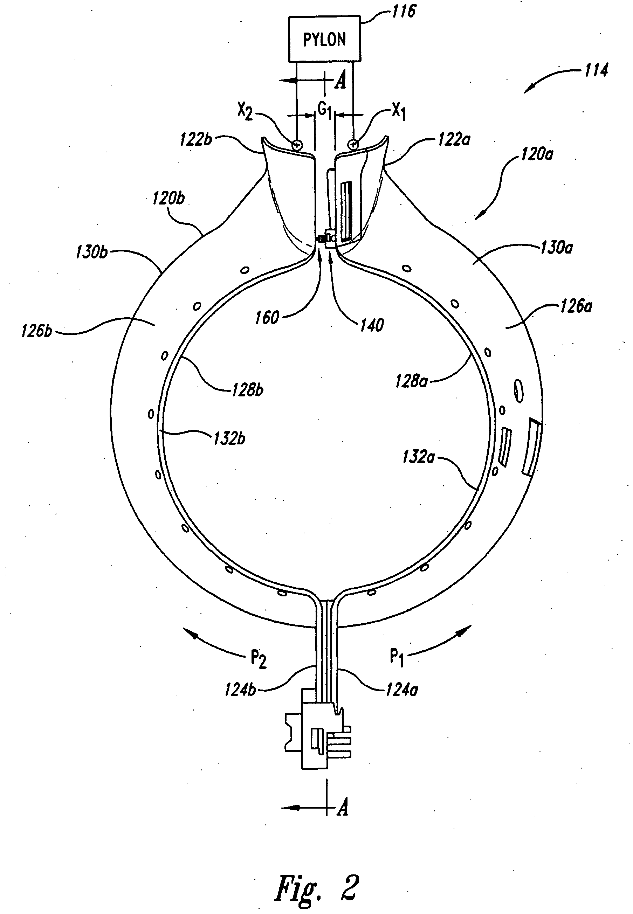

Figure 2 is a schematic front view of several components of the thrust reverser 114 in accordance with one embodiment of the invention. The illustrated thrust reverser 114 includes a first inner panel 120a, a second inner panel 120b opposite the first panel 120a, a catch 140 attached to the first panel 120a, and a latch 160 attached to the second panel 120b. The latch 160 selectively interlocks with the catch 140 to (a) inhibit the first and second inner panels 120a-b from moving relative to each other, and (b) increase the stiffness of the first and second panels 120a-b during operation. The thrust reverser 114 can also have a translating sleeve (not shown) that moves to redirect the gas flow during operation. Alternatively, the thrust reverser 114 can have other configurations.

The individual first and second inner panels 120a-b include an upper portion 122a-b, a lower portion 124a-b, and an arcuate portion 126a-b between the upper and lower portions 122a-b and 124a-b. The arcuate portions 126a-b of the first and second panels 120a-b form a barrel through which engine gases pass during operation. The individual first and second inner panels 120a-b further include an inner surface 128a-b, an outer surface 130a-b opposite the inner surface 128a-b, a forward edge 132a-b, and an aft edge (not shown) opposite the forward edge 132a-b. In one aspect of the illustrated embodiment, the upper portions 122a-b of the first and second inner panels 120a-b are spaced apart by a gap G₁ and pivotably coupled to a pylon 116 (shown schematically) or other support member. As such, the first inner panel 120a can pivot in a direction P₁ about a first pivot point X₁ from a closed position (shown in Figure 2) to an open position (not shown), and the second inner panel 120b can pivot in a direction P₂ about a second pivot point X₂ from a closed position (shown in Figure 2) to an open position (not shown). The first and second inner panels 120a-b are closed during aircraft operation and can be opened for maintenance or repair of the engine. Although in the illustrated embodiment, the first and second inner panels 1 20a-b are a coustic walls, in several embodiments, the panels 120a-b can be other structural members that serve other purposes.

The latch 160 selectively interlocks with the catch 140 to inhibit the first and second panels 120a-b from pivoting about the pylon 116 and to ensure the panels 120a-b remain in the closed position during operation. In the illustrated embodiment, the catch 140 is attached to the inner surface 128a of the upper portion 122a of the first inner panel 120a, and the latch 160 is attached to the inner surface 128b of the upper portion 122b of the second inner panel 120b. The catch 140 and the latch 160 accordingly project inwardly into the gap G₁ between the first and second panels 120a-b. Although in the illustrated embodiment, the catch 140 and the latch 160 are attached to a forward portion of the first and second panels 120a-b, respectively, in other embodiments, the catch 140 and the latch 160 can be coupled to an aft portion or other section of the panels 120a-b. In alternative arrangements, the catch 140 and latch 160 can be coupled to the outer surface 130a-b or another portion of the first and second inner panels 120a-b. Moreover; in other arrangements, in lieu of or in addition to the catch 140 and latch 160, other linkages or locking mechanisms can be used to inhibit the first and second panels 120a-b from moving relative to each other.

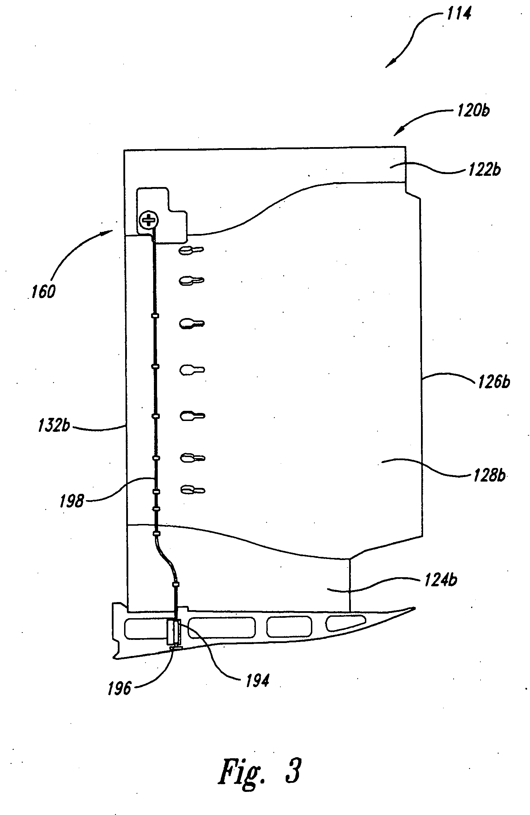

Figure 3 is a schematic side view taken substantially along the line A-A of Figure 2. The illustrated thrust reverser 114 further includes a trigger 194 attached at the lower portion 124b of the second inner panel 120b and an encased cable 198 extending between the trigger 194 and the latch 160. The trigger 194 can include a handle 196 attached to the cable 198 for selectively pushing and/or pulling the cable 198 to remotely actuate the latch 160. The second inner panel 120b can include an access door (not shown) between the trigger 194 and the outer surface 130b (Figure 2) so that an operator can access the trigger 194. In other embodiments, in lieu of or in addition to the cable 198 and the trigger 194, the thrust reverser 114 may include an electrical, hydraulic, and/or other suitable system for remotely actuating the latch 160. Moreover, in several embodiments, the trigger 194 may be attached to another location, and/or the latch 160 may not be a remotely-actuated latch.

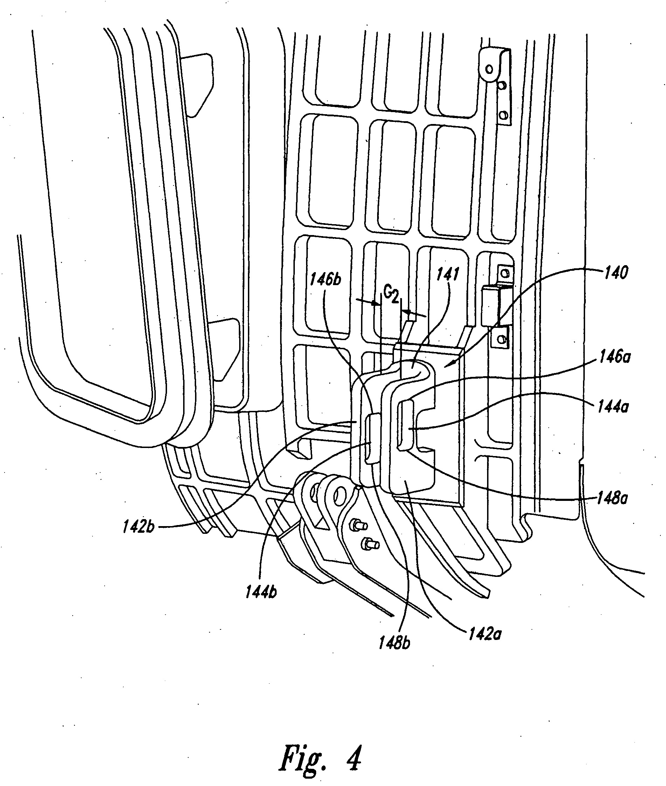

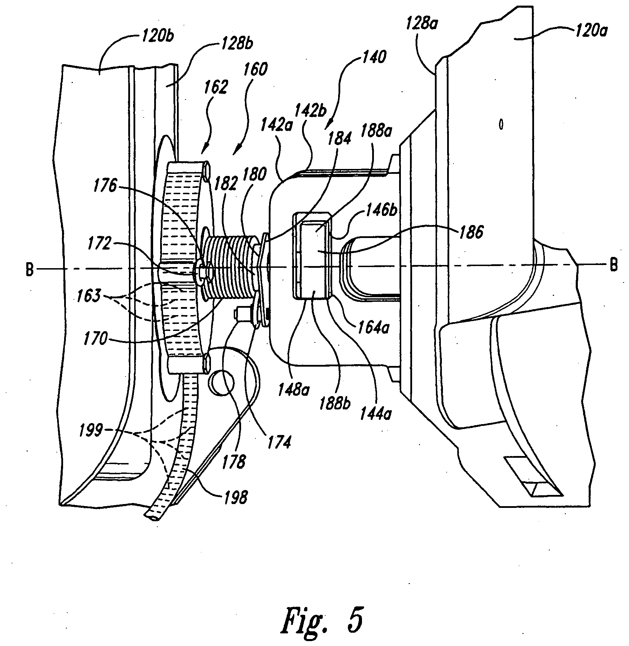

Figure 4 is an enlarged schematic isometric view of the catch 140 in accordance with one embodiment of the invention. The illustrated catch 140 includes a base 141 attached to the inner surface 128a of the first inner panel 120a, a first member 142a projecting from the base 141, and a second member 142b projecting from the base 141. The first member 142a is generally parallel to the second member 142b, and the first and second members 142a-b are spaced a part by a gap G₂. The first member 142a includes a first aperture 144a, and the second member 142b includes a second aperture 144b offset downwardly from the first aperture 144a. More specifically, a first end 146a of the first aperture 144a is above a first end 146b of the second aperture 144b, and a second end 148a of the first aperture 144a is above a second end 148b of the second aperture 144b. The first and second apertures 144a-b are oriented so that an engagement member of the latch 160 (described below with reference to Figure 5) can pivot between (a) a lock position in which the engagement member is received in the apertures 144a-b, and (b) a release position in which the engagement member is external to the apertures 144a-b. In other arrangements, the catch 140 can have other configurations. For example, the catch 140 may include only the first member 142a, and/or the apertures 144a-b may be slots or other openings.

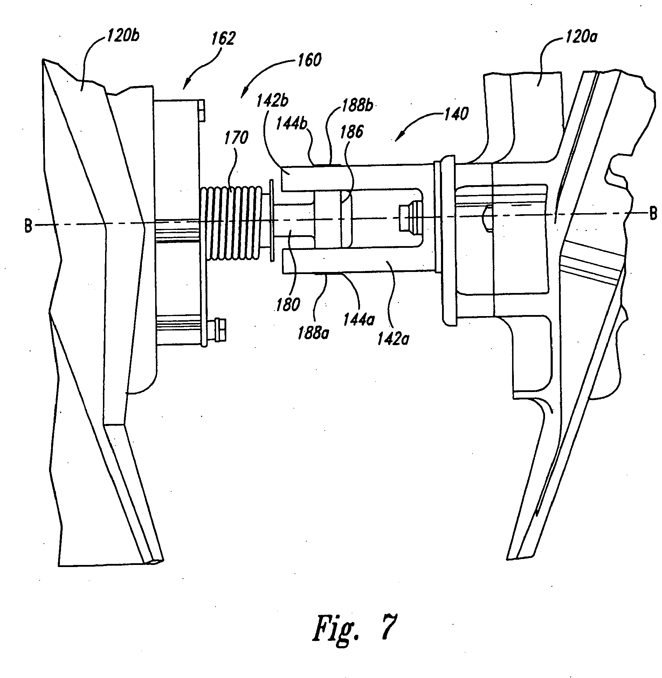

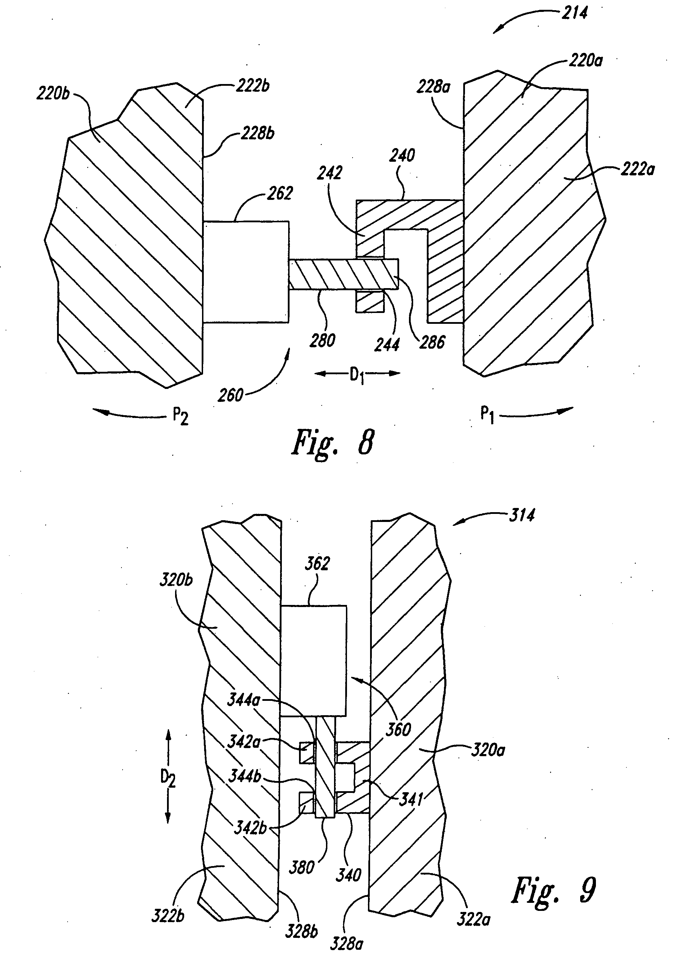

Figure 5 is an enlarged schematic view of the catch 140 and the latch 160 of Figure 2. The illustrated latch 160 includes a driving mechanism 162 and an engagement member 180 coupled to the driving mechanism 162. When an operator actuates the trigger 194 (Figure 3), the driving mechanism 162 pivots the engagement member 180 about an axis B-B between a release position (shown in Figure 5) and a lock position (shown in Figure 7). More specifically, the illustrated driving mechanism 162 includes a gear with teeth 163 (shown in broken lines) configured to engage corresponding teeth 199 (shown in broken lines) on the cable 198 so that linear movement of the cable 198 drives the mechanism 162, which in turn pivots the engagement member 180. Suitable driving mechanisms include Part No. 7-45880-1 manufactured by Triumph Controls Incorporated of North Wales, Pennsylvania. In additional embodiments, such as those described below with reference to Figures 8 and 9, the driving mechanism 162 can have other configurations to selectively move the engagement member 180.

The illustrated engagement member 180 includes a shaft 182, a flange 184 on the shaft 182, and a head 186 at a distal end of the shaft 182. The head 186 includes a first end portion 188a projecting in a first direction generally normal to the shaft 182 and a second end portion 188b projecting in a second direction generally normal to the shaft 182 and opposite the first direction. The illustrated engagement member 180 accordingly has a "T" shaped configuration. The first and second end portions 188a-b are sized to be received within the first and second apertures 144a-b of the catch 140, respectively. As such, when the driving mechanism 162 pivots the engagement member 180 about the axis B-B from the release position to the lock position, the first end portion 188a moves into the first aperture 144a and the second end portion 188b moves into the second aperture 144b. The engagement member 180 can pivot until the first end portion 188a contacts the second end 148a of the first aperture 144a and the second end portion 188b contacts the first end 146b of the second aperture 144b.

The latch 160 further includes a resilient member or torsional spring 170 carried by the section of the shaft 182 between the driving mechanism 162 and the flange 184. The spring 170 includes a first end 172 attached to the driving mechanism 162 with a first pin 176 and a second end 174 attached to the flange 184 of the engagement member 180 with a second pin 178. The spring 170 is configured to exert a torsional force on the engagement member 180 and urge the member 180 toward the lock position. As such, the spring 170 prevents the latch 160 from inadvertently becoming unlocked during operation of the aircraft.

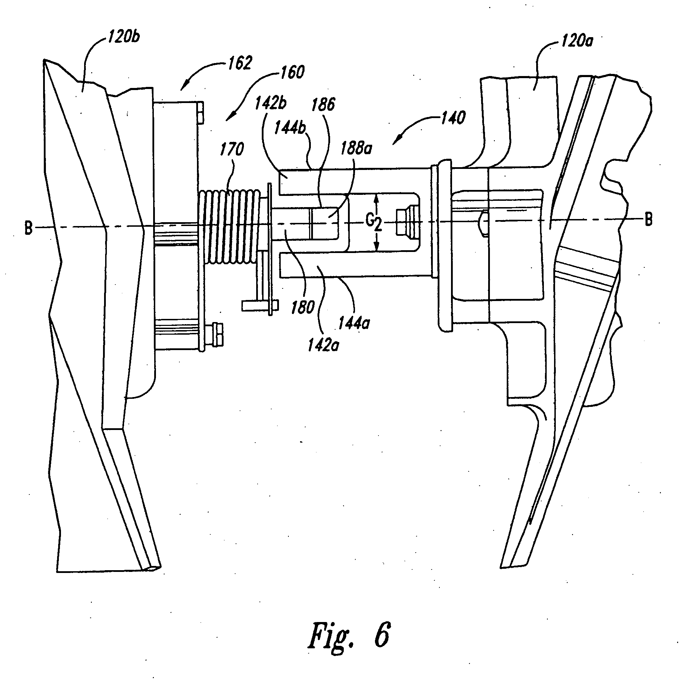

Figure 6 is a schematic top plan view of the catch 140 and the latch 160 of Figure 5. In the release position, the head 186 of the engagement member 180 is positioned in the gap G₂ between the first member 142a and the second member 142b of the catch 140 such that the first and second end portions 188a and 188b (Figure 4) are external to the first and second apertures 144a-b. When the latch 160 is in the release position, the first and second inner panels 120a-b can move relative to each other and pivot to the open position so that an operator can access the engine and/or thrust reverser for repair or maintenance.

Figure 7 is a schematic top plan view of the catch 140 and the latch 160 with the latch 160 in the lock position. In response to an operator's input (e.g., pushing on the handle 196 (Figure 3)), the driving mechanism 162 pivots the engagement member 180 about the axis B-B approximately 90 degrees from the release position to the lock position. In the lock position, the first end portion 188a is received in the first aperture 144a of the catch 140, and the second end portion 188b is received in the second aperture 142b of the catch 140. As such, the interlocked latch 160 and catch 140 inhibit the first and second panels 120a-b from moving relative to each other and pivoting to the open position.

One feature of an embodiment of the thrust reverser 114 illustrated in Figures 2-7 is that the interlocked catch 140 and latch 160 increase the stiffness of the first and second inner panels 120a-b. An advantage of this feature is that the increased stiffness reduces the deflection of the first and second inner panels 120a-b during operation. Accordingly, an aircraft may include a high-thrust engine without causing excessive deflection in the thrust reverser 114 due to the increased loads. Excessive deflection of the first and second inner panels 120a-b significantly changes the load path through the thrust reverser 114 and can damage components. Moreover, the interlocked catch 140 and latch 160 provide hoop continuity at the first and second inner panels 120a-b such that the forward edges 132a-b do not deflect significantly and remain in the V-groove of the fan casing during operation.

Another feature of the thrust reverser 114 illustrated in Figures 2-7 is that the latch 160 is remotely actuated by the trigger 194 located at the lower portion 124b of the second inner panel 120b. An advantage of this feature is that the trigger 194 is positioned at a convenient and accessible location at a lower portion of the thrust reverser 114 to facilitate actuation of the latch 160.

### B. Additional Embodiments of Latching Mechanisms For Use on Thrust Reversers

Figure 8 is a schematic front cross-sectional view of a portion of a thrust reverser 214 in accordance with another arrangement. The illustrated thrust reverser 214 is generally similar to the thrust reverser 114 described above with reference to Figures 2-7. For example, the illustrated thrust reverser 214 includes a first inner panel 220a, a second inner panel 220b opposite the first panel 220a, a catch 240 attached to an inner surface 228a of an upper portion 222a of the first panel 220a, and a latch 260 attached to an inner surface 228b of an upper portion 222b of the second panel 220b. The illustrated catch 240, however, includes a plate having a section 242 spaced apart from the inner surface 228a. The section 242 has an aperture 244 sized and aligned to receive a portion of the latch 260.

The illustrated latch 260 includes a solenoid 262 (shown schematically) and a pin 280 coupled to the solenoid 262. The solenoid 262 selectively moves the pin 280 in a direction D₁ between (a) a lock position (shown in Figure 8) in which a distal portion 286 of the pin 280 is received in the aperture 244 of the catch 240, and (b) a release position (not shown) in which the distal portion 286 of the pin 280 is external to the aperture 244 of the catch 240. In the lock position, the interlocked latch 260 and catch 240 inhibit the first and second inner panels 220a-b from pivoting in the directions P1 and P2, respectively, to the open position. In other arrangements, the catch 240 and/or the latch 260 can have other configurations. For example, the pin 280 can be driven by hydraulic power or another power source.

Figure 9 is a schematic front cross-sectional view of a portion of a thrust reverser 314 in accordance with another embodiment of the invention. The illustrated thrust reverser 314 is generally similar to the thrust reverser 114 described above with reference to Figures 2-7. For example, the illustrated thrust reverser 314 includes a first inner panel 320a, a second inner panel 320b opposite the first panel 320a, a catch 340 attached to an inner surface 328a of an upper portion 322a of the first panel 320a, and a latch 360 attached to an inner surface 328b of an upper portion 322b of the second panel 320b. The illustrated catch 340, however, includes a base 341, a first member 342a projecting from the base 341, and a second member 342b projecting from the base 341 and spaced apart from the first member 342a. The first member 342a includes a first aperture 344a, and the second member 342b includes a second aperture 344b aligned with the first aperture 344a.

The illustrated latch 360 includes a solenoid 362 (shown schematically) and a pin 380 coupled to the solenoid 362. The solenoid 362 selectively moves the pin 380 in a direction O₂ between (a) a lock position in which the pin 380 is received in the first and second apertures 344a-b, and (b) a release position in which the pin 380 is external to the apertures 344a-b. In the lock position, the interlocked latch 360 and catch 340 inhibit the first and second inner panels 320a-b from pivoting in the directions P₁ and P₂, respectively, to the open position.

From the foregoing, it will be appreciated that specific embodiments of the invention have been described herein for purposes of illustration, but that various modifications may be made without deviating from the - scope of the invention. For example, many of the features of one embodiment can be combined with other embodiments in addition to or in lieu of the features of the other embodiments. Accordingly, the invention is not limited except as by the appended claims.

## Claims

1. An aircraft system, comprising:
a thrust reverser (114) including a first inner panel (120a), and a second inner panel (120b) opposite the first inner panel;
a catch (140) projecting inwardly from the first inner panel (120a), wherein the catch (140) includes a first member (142a) with a first aperture (144a) and a second member (142b) with a second aperture (144b), the first member (142a) being spaced apart from and generally parallel to the second member (142b);
a latch (160) projecting inwardly from the second inner panel (120b), the latch (160) positioned to selectively interlock with the catch (140) to inhibit relative movement between the first and second inner panels (120a, 120b), wherein the latch (160) is a remotely-actuated latch having a driving mechanism (162) and an engagement member (180) coupled to the driving mechanism (162), the engagement member (180) having a first end portion (188a) and a second end portion (188b); and
the driving mechanism (162) is configured to move the engagement member (180) between (a) a lock position in which the first end portion (188a) is received at least partially in the first aperture (144a) and the second end portion (188b) is received at least partially in the second aperture (144b), and (b) a release position in which the first end portion (188a) is external to the first aperture (144a) and the second end portion (188b) is external to the second aperture (144b).

2. The aircraft system of claim 1 wherein the engagement member (180) rotates between the lock position and the release position.

3. The aircraft system of any of claims 1-2 wherein:
the engagement member (180) has a "T" shaped configuration.

4. The aircraft system of any of claims 1-3 wherein the first and second inner panels (120a, 120b) further include a lower portion (124a, 124b) and an arcuate portion (126a, 126b) between upper and lower portions.

5. The aircraft system of any of claims 1-4 wherein:
the first and second inner panels (120a, 120b) further include a lower portion (124a, 124b) and an arcuate portion (126a, 126b) between upper and lower portions; and
the system further comprises a trigger (194) at least proximate to the lower portion of the second inner panel (120b) and an actuator coupling the trigger (194) to the latch (160).

6. The aircraft system of any of claims 1-5, further comprising a support member;
wherein the upper portion (122a) of the first inner panel (120a) is pivotably coupled to the support member;
wherein the upper portion (122b) of the second inner panel (120b) is pivotably coupled to the support member; and
wherein the first and second inner panels (120a, 120b) are inhibited from moving relative to the support member when the latch (160) interlocks with the catch.

7. The aircraft system of any of claims 1-6 wherein:
the first and second inner panels (120a, 120b) further include a forward portion and an aft portion opposite the forward portion; and
the catch (140) is attached to the forward portion of the first inner panel (120a) and the latch (160) is attached to the forward portion of the second inner panel (120b).

8. The aircraft system of any of claims 1-7 wherein:
the first and second inner panels (120a, 120b) further include a forward portion and an aft portion opposite the forward portion; and
the catch (140) is attached to the aft portion of the first inner panel (120a) and the latch (160) is attached to the aft portion of the second inner panel (120b).

9. The aircraft system of any of claims 1-8 wherein:
the upper portion of the first inner panel (120a) is spaced apart from the upper portion of the second inner panel (120b) by a gap; and
the latch and the catch project into the gap.

10. The aircraft system of any of claims 1-9, further comprising:
a wing (104) coupled to the thrust reverser (114);
a fuselage (102) attached to the wing (104); and
a tail (106) coupled to the fuselage (102).

11. The aircraft system of any of claims 1-10 wherein the latch (160) further includes
a resilient member to urge the engagement member (180) to move in a direction.

12. The aircraft system of claim 1 wherein the driver includes a solenoid.

13. A method for operating a latching mechanism on a thrust reverser (114) of an aircraft, the thrust reverser (114) having a first inner panel (120a) and a second inner panel (120b) opposite the first inner panel, the method comprising:
remotely actuating a latch (160) to move an engagement member (180) of the latch (160) from (a) a lock position in which the engagement member (180) is interlocked with a catch (140) such that the latch (160) and catch (140) inhibit relative motion between the first and second inner panels (120a, 120b), to (b) a release position in which the latch (160) and catch (140) do not inhibit relative movement between the first and second inner panels (120a, 120b), wherein the catch (140) projects inwardly from an inner surface of an upper portion of the first inner panel (120a) and the latch (160) projects inwardly from an inner surface of an upper portion of the second inner panel (120b); and
moving at least one of the first and second inner panels (120a, 120b) relative to the other.

14. The method of claim 13 wherein remotely actuating the latch (160) comprises actuating a trigger (194) at a lower portion of the second inner panel (120b).

15. The method according to any of claims 13 to 14,
wherein an aircraft system according to any of claims 1-12 is used.

## Patentansprüche

1. Luftfahrzeugsystem, das aufweist:
einen Schubumkehrer (114), der ein erstes inneres Paneel (120a) und ein dem ersten inneren Paneel gegenüberliegendes zweites inneres Paneel (120b) aufweist;
einen Schließer (140), die von dem ersten inneren Paneel (120a) nach innen ragt, wobei der Schließer (140) ein erstes Element (142a) mit einer ersten Öffnung (144a) und ein zweites Element (142b) mit einer zweiten Öffnung (144b) aufweist und wobei das erste Element (142a) von dem zweiten Element (142b) beabstandet und in etwa parallel zu diesem angeordnet ist;
einen Riegel (160), der von dem zweiten inneren Paneel (120b) nach innen ragt, wobei der Riegel (160) so positioniert ist, dass er selektiv in den Schließer eingreift, um eine relative Bewegung zwischen dem ersten inneren und dem zweiten inneren Paneel (120a, 120b) zu verhindern, wobei es sich bei dem Riegel (160) um einen durch Fernbefehl betätigten Riegel (160) handelt, der einen Antriebsmechanismus (162) und ein mit dem Antriebsmechanismus (162) verbundenes Eingriffselement (180) aufweist,
wobei das Eingriffselement (180) einen ersten Endbereich (188a) und einen zweiten Endbereich (188b) aufweist; und
wobei der Antriebsmechanismus (162) zum Bewegen des Eingriffselements (180) zwischen (a) einer Verriegelungsposition, in der der erste Endbereich (188a) zumindest zum Teil in der ersten Öffnung (144a) und der zweite Endbereich (188b) zumindest zum Teil in der zweiten Öffnung (144b) aufgenommen ist, und (b) einer Entriegelungsposition ausgebildet ist, in der sich der erste Endbereich (188a) außerhalb der ersten Öffnung (144a) und der zweite Endbereich (188b) außerhalb der zweiten Öffnung (144b) befindet.

2. Luftfahrzeugsystem nach Anspruch 1, wobei sich das Eingriffselement (180) zwischen der Verriegelungsposition und der Entriegelungsposition dreht.

3. Luftfahrzeugsystem nach einem der Ansprüche 1 bis 2, wobei:
das Eingriffselement (180) eine "T"-förmige Gestalt aufweist.

4. Luftfahrzeugsystem nach einem der Ansprüche 1 bis 3, wobei das erste und zweite innere Paneel (120a, 120b) ferner einen unteren Bereich (124a, 124b) und einen bogenförmigen Bereich (126a, 126b) zwischen dem oberen und unteren Bereich aufweisen.

5. Luftfahrzeugsystem nach einem der Ansprüche 1 bis 4, wobei:
das erste und zweite innere Paneel (120a, 120b) ferner einen unteren Bereich (124a, 124b) und einen bogenförmigen Bereich (126a, 126b) zwischen dem oberen und unteren Bereich aufweisen; und
das System ferner einen Auslöser (194) zumindest benachbart zu dem unteren Bereich des zweiten inneren Paneels (120b) und einen Aktor aufweist, der den Auslöser (194) an den Riegel (160) koppelt.

6. Luftfahrzeugsystem nach einem der Ansprüche 1 bis 5, das ferner ein Stützelement aufweist;
wobei der obere Bereich (122a) des ersten inneren Paneels (120a) schwenkbar mit dem Stützelement verbunden ist;
wobei der obere Bereich (122b) des zweiten inneren Paneels (120b) schwenkbar mit dem Stützelement verbunden ist; und wobei eine Bewegung des ersten und zweiten inneren Paneels (120a, 120b) relativ zu dem Stützelement verhindert wird, wenn der Riegel (160) und der Schließer ineinandergreifen.

7. Luftfahrzeugsystem nach einem der Ansprüche 1 bis 6, wobei:
das erste und zweite innere Paneel (120a, 120b) ferner einen vorderen Bereich und einen dem vorderen Bereich gegenüberliegenden hinteren Bereich aufweisen; und
der Schließer (140) an dem vorderen Bereich des ersten inneren Paneels (120a) und der Riegel (160) an dem vorderen Bereich des zweiten inneren Paneels (120b) angebracht ist.

8. Luftfahrzeugsystem nach einem der Ansprüche 1 bis 7, wobei:
das erste und zweite innere Paneel (120a, 120b) ferner einen vorderen Bereich und einen dem vorderen Bereich gegenüberliegenden hinteren Bereich aufweisen; und
der Schließer (140) an dem hinteren Bereich des ersten inneren Paneels (120a) und der Riegel (160) an dem hinteren Bereich des zweiten inneren Paneels (120b) angebracht ist.

9. Luftfahrzeugsystem nach einem der Ansprüche 1 bis 8, wobei:
der obere Bereich des ersten inneren Paneels (120a) von dem oberen Bereich des zweiten inneren Paneels (120b) über einen Spalt beabstandet ist; und
der Riegel und der Schließer in den Spalt ragen.

10. Luftfahrzeugsystem nach einem der Ansprüche 1 bis 9, das ferner aufweist:
eine Tragfläche (104), die an den Schubumkehrer (114) gekoppelt ist;
einen Rumpf (102), der an der Tragfläche (104) angebracht ist;
und ein Heck (106), das an den Rumpf (102) gekoppelt ist.

11. Luftfahrzeugsystem nach einem der Ansprüche 1 bis 10, wobei der Riegel (160) ferner ein elastisches Element aufweist, um das Eingriffselement (180) zu einer Bewegung in eine Richtung zu zwingen.

12. Luftfahrzeugsystem nach Anspruch 1, wobei der Antrieb ein Solenoid umfasst.

13. Verfahren zum Bedienen eines Verriegelungsmechanismus an einem Schubumkehrer (114) eines Luftfahrzeugs, wobei der Schubumkehrer (114) ein erstes inneres Paneel (120a) und ein dem ersten inneren Paneel gegenüberliegendes zweites inneres Paneel (120b) aufweist; wobei das Verfahren umfasst:
Betätigen eines Riegels (160) durch Fernbefehl, um ein Eingriffselement (180) des Riegels (160) zwischen (a) einer Verriegelungsposition, in der das Eingriffselement (180) und ein Schließer (140) ineinandergreifen, sodass der Riegel (160) und der Schließer (140) eine relative Bewegung zwischen dem ersten und
dem zweiten inneren Paneel (120a, 120b) verhindern, und (b) einer Entriegelungsposition zu bewegen, in der der Riegel (160) und der Schließer (140) eine relative Bewegung zwischen dem ersten und dem zweiten inneren Paneel (120a, 120b) nicht verhindern, wobei der Schließer (140) von einer inneren Oberfläche eines oberen Bereichs des ersten inneren Paneels (120a) nach innen ragt und der Riegel (160) von einer inneren Oberfläche eines oberen Bereichs des zweiten inneren Paneels (120b) nach innen ragt; und
Bewegen des ersten und/oder des zweiten inneren Paneels (120a, 120b) relativ zueinander.

14. Verfahren nach Anspruch 13, wobei ein Betätigen des Riegels (160) durch Fernbefehl umfasst, einen Auslöser (194) an einem unteren Bereich des zweiten inneren Paneels (120b) zu betätigen.

15. Verfahren nach einem der Ansprüche 13 bis 14, wobei ein Luftfahrzeugsystem nach einem der Ansprüche 1 bis 12 eigesetzt wird.

## Revendications

1. Système d'aéronef, comprenant :
un inverseur de poussée (114) comprenant un premier panneau intérieur (120a), et un second panneau intérieur (120b) opposé au premier panneau intérieur ;
un cran (140) faisant saillie vers l'intérieur à partir du premier panneau intérieur (120a), dans lequel le cran (140) comprend un premier élément (142a) ayant une première ouverture (144a) et un second élément (142b) ayant une seconde ouverture (144b), le premier élément (142a) étant espacé de et généralement parallèle au second élément (142b) ;
un loquet (160) faisant saillie vers l'intérieur à partir du second panneau intérieur (120b), le loquet (160) étant positionné pour un verrouillage mutuel de manière sélective avec le cran (140) pour empêcher un mouvement relatif entre les premier et second panneaux intérieurs (120a, 120b), dans lequel le loquet (160) est un loquet actionné à distance ayant un mécanisme d'entraînement (162) et un élément de mise en prise (180) couplé au mécanisme d'entraînement (162), l'élément de mise en prise (180) ayant une première partie d'extrémité (188a) et une seconde partie d'extrémité (188b) ; et
le mécanisme d'entraînement (162) est configuré pour déplacer l'élément de mise en prise (180) entre (a) une position de verrouillage dans laquelle la première partie d'extrémité (188a) est reçue au moins partiellement dans la première ouverture (144a) et la seconde partie d'extrémité (188b) est reçue au moins partiellement dans la seconde ouverture (144b), et (b) une position de libération dans laquelle la première partie d'extrémité (188a) est à l'extérieur de la première ouverture (144a) et la seconde partie d'extrémité (188b) est à l'extérieur de la seconde ouverture (144b).

2. Système d'aéronef selon la revendication 1, dans lequel l'élément de mise en prise (180) tourne entre la position de verrouillage et la position de libération.

3. Système d'aéronef selon l'une quelconque des revendications 1 et 2, dans lequel :
l'élément de mise en prise (180) a une configuration en forme de « T ».

4. Système d'aéronef selon l'une quelconque des revendications 1 à 3, dans lequel les premier et second panneaux intérieurs (120a, 120b) comprennent en outre une partie inférieure (124a, 124b) et une partie en arc (126a, 126b) entre des parties supérieure et inférieure.

5. Système d'aéronef selon l'une quelconque des revendications 1 à 4, dans lequel :
les premier et second panneaux intérieurs (120a, 120b) comprennent en outre une partie inférieure (124a, 124b) et une partie en arc (126a, 126b) entre des parties supérieure et inférieure ; et
le système comprend en outre une gâchette (194) au moins à proximité de la partie inférieure du second panneau intérieur (120b) et un actionneur couplant la gâchette (194) au loquet (160).

6. Système d'aéronef selon l'une quelconque des revendications 1 à 5, comprenant en outre un élément de support ;
dans lequel la partie supérieure (122a) du premier panneau intérieur (120a) est couplée de manière pivotante à l'élément de support ;
dans lequel la partie supérieure (122b) du second panneau intérieur (120b) est couplée de manière pivotante à l'élément de support ; et
dans lequel les premier et second panneaux intérieurs (120a, 120b) sont empêchés de se déplacer par rapport à l'élément de support lorsque le loquet (160) vient en verrouillage mutuel avec le cran.

7. Système d'aéronef selon l'une quelconque des revendications 1 à 6, dans lequel :
les premier et second panneaux intérieurs (120a, 120b) comprennent en outre une partie avant et une partie arrière opposée à la partie avant ; et
le cran (140) est fixé à la partie avant du premier panneau intérieur (120a) et le loquet (160) est fixé à la partie avant du second panneau intérieur (120b).

8. Système d'aéronef selon l'une quelconque des revendications 1 à 7, dans lequel :
les premier et second panneaux intérieurs (120a, 120b) comprennent en outre une partie avant et une partie arrière opposée à la partie avant ; et
le cran (140) est fixé à la partie arrière du premier panneau intérieur (120a) et le loquet (160) est fixé à la partie arrière du second panneau intérieur (120b).

9. Système d'aéronef selon l'une quelconque des revendications 1 à 8, dans lequel :
la partie supérieure du premier panneau intérieur (120a) est espacée de la partie supérieure du second panneau intérieur (120b) par un espace ; et
le loquet et le cran font saillie jusque dans l'espace.

10. Système d'aéronef selon l'une quelconque des revendications 1 à 9, comprenant en outre :
une aile (104) couplée à l'inverseur de poussée (114) ;
un fuselage (102) fixé à l'aile (104) ; et
une queue (106) couplée au fuselage (102).

11. Système d'aéronef selon l'une quelconque des revendications 1 à 10, dans lequel le loquet (160) comprend en outre
un élément élastique pour pousser l'élément de mise en prise (180) à se déplacer dans une direction.

12. Système d'aéronef selon la revendication 1, dans lequel le dispositif d'entraînement comprend une électrovanne.

13. Procédé d'actionnement d'un mécanisme de verrouillage sur un inverseur de poussée (114) d'un aéronef, l'inverseur de poussée (114) ayant un premier panneau intérieur (120a) et un second panneau intérieur (120b) opposé au premier panneau intérieur, le procédé comprenant les étapes consistant à :
actionner à distance un loquet (160) pour déplacer un élément de mise en prise (180) du loquet (160) depuis (a) une position de verrouillage dans laquelle l'élément de mise en prise (180) est verrouillé mutuellement avec un cran (140) de telle sorte que le loquet (160) et le cran (140) empêchent un mouvement relatif entre les premier et second panneaux intérieurs (120a, 120b), vers b) une position de libération dans laquelle le loquet (160) et le cran (140) n'empêchent pas un mouvement relatif entre les premier et second panneaux intérieurs (120a, 120b), dans lequel le cran (140) fait saillie vers l'intérieur à partir d'une surface intérieure d'une partie supérieure du premier panneau intérieur (120a) et le loquet (160) fait saillie vers l'intérieur à partir d'une surface intérieure d'une partie supérieure du second panneau intérieur (120b) ; et
déplacer au moins un des premier et second panneaux intérieur (120a, 120b) par rapport à l'autre.

14. Procédé selon la revendication 13, dans lequel l'actionnement à distance du loquet (160) comprend l'actionnement d'une gâchette (194) au niveau d'une partie inférieure du second panneau intérieur (120b).

15. Procédé selon l'une quelconque des revendications 13 à 14, dans lequel un système d'aéronef selon l'une quelconque des revendications 1 à 12 est utilisé.
